(19) **Europäisches Patentamt / European Patent Office / Office européen des brevets**

(11) **EP 4 120 682 A2**

(12) **EUROPEAN PATENT APPLICATION**

(43) Date of publication:
**18.01.2023  Bulletin 2023/03**

(21) Application number: **22184016.8**

(22) Date of filing: **11.07.2022**

(51) International Patent Classification (IPC):
**H04N 19/122** (2014.01)   **H04N 19/129** (2014.01)
**H04N 19/13** (2014.01)   **H04N 19/176** (2014.01)
**H04N 19/18** (2014.01)   **H04N 19/60** (2014.01)
**H04N 19/70** (2014.01)   **H04N 19/91** (2014.01)

(52) Cooperative Patent Classification (CPC):
**H04N 19/129; H04N 19/122; H04N 19/13; H04N 19/176; H04N 19/18; H04N 19/60; H04N 19/70; H04N 19/91**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2021  US 202163221040 P**
**24.12.2021  TW 110148784**

(71) Applicant: **Industrial Technology Research Institute**
**Chutung, Hsinchu 310401 (TW)**

(72) Inventors:
• **WANG, Sheng-Po**
**320 Taoyuan City (TW)**
• **LIN, Ching-Chieh**
**105 Taipei City (TW)**
• **LIN, Chun-Lung**
**114 Taipei City (TW)**

(74) Representative: **Kurig, Thomas**
**Becker Kurig & Partner**
**Patentanwälte mbB**
**Bavariastraße 7**
**80336 München (DE)**

(54) **FEATURE DATA ENCODING METHOD, ENCODER, FEATURE DATA DECODING METHOD, AND DECODER**

(57)    A feature data encoding method, an encoder (310), a feature data decoding method, and a decoder (320) are provided. The feature data encoding method includes following steps. A transform unit (120, 220, 800) is divided into a plurality of sub-blocks and N sub-transform units (611, 621~623, 700, 811~814). A reference origin (O1a, O1b) and a LSC (124, 224, 611a, 622a) are determined in an i-th sub-transform unit of the sub-transform units (611, 621~623, 700, 811~814), and an original coordinate of the last significant coefficient (124, 224, 611a, 622a) of the i-th sub-transform unit is modified to a specific coordinate (C1). The i-th sub-transform unit is scanned from a specific sub-block (122, 222, 611b, 622b, 811a~813a) of the i-th sub-transform unit, and significant feature coefficients in the i-th sub-transform unit are individually encoded as coded data (D1).

| Obtaining a transform unit (TU) including a plurality of feature coefficients and dividing the TU into a plurality of sub-blocks | S410 |
| Dividing the TU into N sub-transform units | S420 |
| Determining a reference origin and a last significant coefficient (LSC) in an i-th sub-transform unit of the N sub-transform units and modifying an original coordinate of the LSC of the i-th sub-transform unit to a specific coordinate based on the reference origin of the i-th sub-transform unit | S430 |
| Scanning the i-th sub-transform unit from a specific sub-block of the i-th sub-transform unit and individually encoding at least one significant feature coefficient in the i-th sub-transform unit as a coded data | S440 |
| Providing a first specific indicator, a specific coordinate of the LSC of each sub-transform unit, and the coded data of each significant feature coefficient | S450 |

FIG. 4

EP 4 120 682 A2

**Description**

TECHNICAL FIELD

The invention relates to a feature data processing mechanism; more particularly, the invention relates to a feature data encoding method, an encoder, a feature data decoding method, and a decoder.

BACKGROUND

Due to the rapid growth of applications in association with Internet of Things (IoT), a large number of intelligent innovative application requirements (such as smart city/smart security protection, smart car networking, smart home appliances, and so on) have been derived. In the future trend, mobile phones, cameras, home appliances, and driving assistance systems will all have artificial intelligence (AI) functions (commonly known as AIoT devices), and equipping the front-end AIoT devices with AI computing power will become an important development trend in the B5G/6G era.

However, in consideration of costs, power consumption, mechanism constraints, and system flexibility, the front-end devices serve to perform preliminary computing functions, while in-depth computation and training still require the cooperation of edge devices/back-end servers (such as segmented machine vision computations). As such, it is foreseeable that the following technical requirements of the segmented machine vision computations for coding and transmission may be developed.

For instance, machine vision applications require the reduction of computational complexity and coding delay time to meet the demands for highly instant services (which may be referred to as a low latency requirement). In addition, to maintain the accuracy of AI recognition, it is necessary to retain the detailed information required by the machine, so as to avoid image distortion caused by excessive processing and the resultant decrease in the system recognition rate (which may be referred to as a high accuracy requirement). Moreover, it is necessary to encode features in a common format, and machine vision tasks on different applications should be provided in a shared backbone manner to reuse the extracted features (which may be referred to as a multiple application requirement).

The existing video compression technology may achieve strong compression performance but may not be completely suitable for machine vision applications. The main reason lies in that the feature image content is not intended to be viewed by human beings; hence, the conventional encoding technology is not fully applicable to compression of feature images but may increase the latency time. Meanwhile, in order to meet the applications of the high resolution rate, it is necessary to design an encoding method suitable for retaining high-frequency data to provide improved data accuracy.

SUMMARY

The invention provides a feature data encoding method, an encoder, a feature data decoding method, and a decoder which may be applied to resolve said technical issues.

In an embodiment of the invention, a feature data encoding method adapted to an encoder is provided, and the method includes following steps. A transform unit (TU) including a plurality of feature coefficients is obtained, and the TU is divided into a plurality of sub-blocks. The TU is divided into N sub-TUs, wherein each of the sub-TUs includes at least one of the sub-blocks, and N is an integer greater than or equal to 1. A reference origin and a last significant coefficient (LSC) are determined in an i-th sub-TU of the N sub-TUs, and an original coordinate of the LSC of the i-th sub-TU is modified to a specific coordinate based on the reference origin of the i-th sub-TU, wherein the LSC of the i-th sub-TU is located in a specific sub-block in the i-th sub-TU, i is an index value, and $1 \leq i \leq N$. The i-th sub-TU is scanned from the specific sub-block of the i-th sub-TU, and at least one significant feature coefficient in the i-th sub-TU is individually encoded as a coded data. A first specific indicator, the specific coordinate of the LSC of each of the sub-TUs, and the coded data of each of the at least one significant feature coefficient are provided, wherein the first specific indicator indicates the specific coordinate of the LSC of each of the sub-TUs is modified.

In an embodiment of the invention, an encoder including a transceiver and a processor is provided. The processor is coupled to the transceiver and configured to execute following steps. A transform unit (TU) including a plurality of feature coefficients is obtained, and the TU is divided into a plurality of sub-blocks. The TU is divided into N sub-TUs, wherein each of the sub-TUs includes at least one of the sub-blocks, and N is an integer greater than or equal to 1. A reference origin and a last significant coefficient (LSC) are determined in an i-th sub-TU of the N sub-TUs, and an original coordinate of the LSC of the i-th sub-TU is modified to a specific coordinate based on the reference origin of the i-th sub-TU, wherein the LSC of the i-th sub-TU is located in a specific sub-block in the i-th sub-TU, i is an index value, and $1 \leq i \leq N$. The i-th sub-TU is scanned from the specific sub-block of the i-th sub-TU, and at least one significant feature coefficient in the i-th sub-TU is individually encoded as a coded data. The transceiver is controlled to provide a first specific indicator, the specific coordinate of the LSC of each of the sub-TUs, and the coded data of each of the at least one significant feature coefficient, wherein the first specific indicator indicates the specific coordinate of the LSC of each of the sub-TUs is modified.

In an embodiment of the invention, a feature data decoding method adapted to a decoder is provided, and the method includes following steps. A first specific indicator, a specific coordinate of an individual LSC of N sub-transform units (sub-TUs), and individual coded data of at least one significant feature coefficient are received, wherein the first specific indicator indicates the specific coordinate of the LSC of each of the sub-TUs is modified, and N is an integer greater than or equal to 1. A plurality of sub-blocks of a TU are reconstructed based on the coded data of each of the at least one significant feature coefficient. A specific sub-block is found from an i-th sub-TU of the N sub-TUs based on the specific coordinate of the LSC of the i-th sub-TU of the N sub-TUs, wherein i is an index value, and $1 \le i \le N$. The i-th sub-TU is scanned from the specific sub-block of the i-th sub-TU, and the coded data of each of the at least one significant feature coefficient in the i-th sub-TU are decoded.

In an embodiment of the invention, a decoder including a transceiver and a processor is provided. The processor is coupled to the transceiver and configured to execute following steps. The transceiver is controlled to receive a first specific indicator, a specific coordinate of an individual last significant coefficient (LSC) of N sub-transform units (sub-TUs), and individual coded data of at least one significant feature coefficient, wherein the first specific indicator indicates the specific coordinate of the LSC of each of the sub-TUs is modified, and N is an integer greater than or equal to 1. A plurality of sub-blocks of a TU are reconstructed based on the coded data of each of the at least one significant feature coefficient. A specific sub-block is found from an i-th sub-TU of the N sub-TUs based on the specific coordinate of the LSC of the i-th sub-TU of the N sub-TUs, wherein i is an index value, and $1 \le i \le N$. The i-th sub-TU is scanned from the specific sub-block of the i-th sub-TU, and the coded data of each of the at least one significant feature coefficient of the i-th sub-TU are decoded.

Several exemplary embodiments accompanied with figures are described in detail below to further describe the invention in details.

BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the invention.

FIG. 1 is a schematic view of a natural image compression mechanism according to an embodiment of the invention.
FIG. 2 is a schematic view of compression of a feature data diagram according to an embodiment of the invention.
FIG. 3 is a schematic view of a feature data processing system according to an embodiment of the invention.
FIG. 4 is a flowchart of a feature data encoding method according to an embodiment of the invention.
FIG. 5 is a schematic view of dividing a transform unit (TU) according to different embodiments of the invention.
FIG. 6A and FIG. 6B are schematic views of a coordinate modification mechanism according to an embodiment of the invention.
FIG. 7 is a schematic view of a plurality of predetermined scanning methods according to an embodiment of the invention.
FIG. 8A is a schematic view of scanning each sub-transform unit (sub-TU) according to an embodiment of the invention.
FIG. 8B is a schematic view of various scanning methods of sub-blocks according to an embodiment of the invention.
FIG. 9 is a flowchart of a feature data decoding method according to an embodiment of the invention.

DETAILED DESCRIPTION OF DISCLOSED EMBODIMENTS

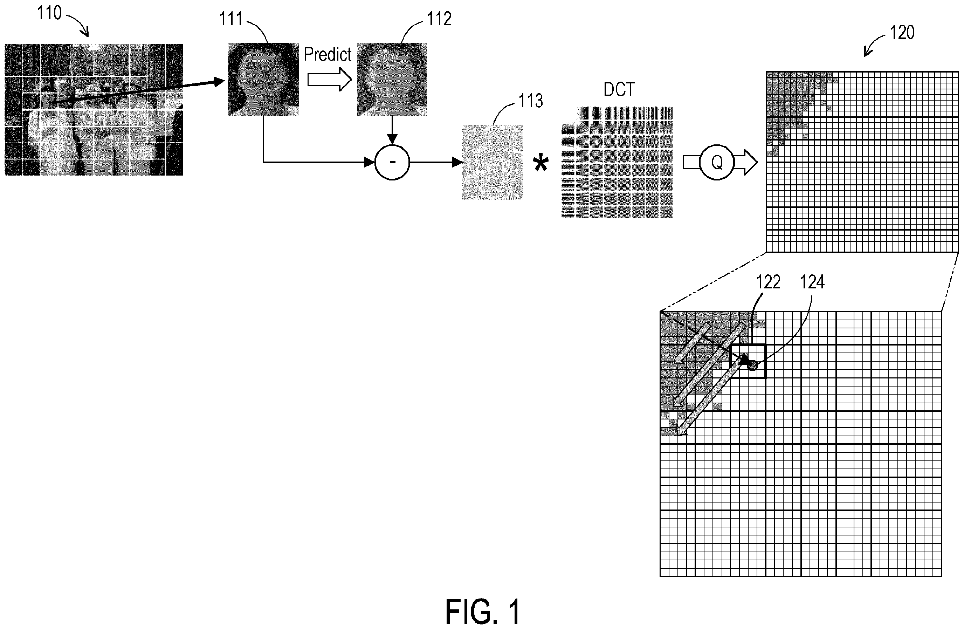

FIG. 1 is a schematic view of a natural image compression mechanism according to an embodiment of the invention. In this embodiment, when an encoder intends to encode an image 110, the image 110 may be divided into a plurality of sub-images, and a subsequent processing step is performed on each sub-image. A sub-image 111 is taken as an example. The encoder may, for instance, predict a predicted image 112 corresponding to the sub-image 111 based on a relevant image prediction algorithm, and the sub-image 111 and the predicted image 112 are subtracted to obtain a residual image 113. The encoder may then perform a discrete cosine transform (DCT) (and quantization) on the residual image 113 to generate a transform unit (TU) 120.

In FIG. 1, the TU 120 may include a plurality of feature coefficients illustrated as grids, and the above-mentioned feature coefficients may include, for instance, significant feature coefficients (i.e., non-zero feature coefficients illustrated as shaded grids) and insignificant feature coefficients (i.e., feature coefficients whose value is 0, which are illustrated as blank grids).

As shown in FIG. 1, the TU 120 may, for instance, be divided into a plurality of sub-blocks, and each of the sub-blocks may include, for instance, 4×4 feature coefficients. In an embodiment, the sub-blocks in the TU 120 may include a plurality of significant sub-blocks and insignificant sub-blocks, wherein each significant sub-block includes at least one significant feature coefficient, and each insignificant sub-block merely includes the insignificant feature coefficients. That is, in the scenario shown in FIG. 1, the significant sub-block is, for instance, a sub-block including at least one shaded grid (i.e., the significant feature coefficient), while the insignificant sub-block is, for instance, a sub-block including no shaded grid.

After that, the encoder may find a last significant coefficient (LSC) 124 in the TU 120 and find the specific sub-block 122 that includes the LSC 124. Next, the encoder may scan from the specific sub-block 122 to an initial sub-block of the TU 120 (e.g., the sub-block located in the upper left corner of the TU 120) and perform operations (such as an encoding operation) on each significant feature coefficient in each sub-block.

As shown in FIG. 1, in the TU 120, the significant feature coefficients are mainly concentrated in the low-frequency region in the upper left corner. Since human eyes are more sensitive to low-frequency information, recording the LSC 124 as described above may effectively omit steps of recording high-frequency sub-blocks, thereby increasing the compression rate of images. For instance, in the TU 120 of FIG. 1, it is merely necessary to record the relevant information of about 9 sub-blocks.

However, for the feature data diagram containing more high-frequency information, the method shown in FIG. 1 cannot ensure the favorable compression rate.

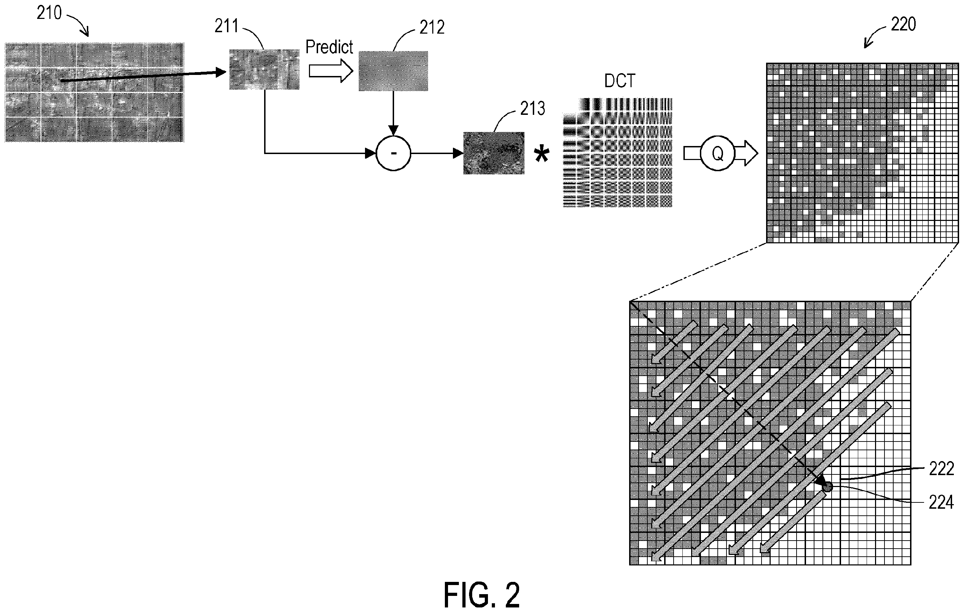

FIG. 2 is a schematic view of compression of a feature data diagram according to an embodiment of the invention. In this embodiment, when the encoder is about to encode a reference feature data diagram 210, the reference feature data diagram 210 may be divided into a plurality of feature data diagrams, and subsequent processing is performed on each feature data diagram. A feature data diagram 211 is taken as an example. The encoder may predict a predicted feature data diagram 212 corresponding to the feature data diagram 211 based on a relevant image prediction algorithm, and then the feature data diagram 211 and the predicted feature data diagram 212 are subtracted to obtain a difference feature data diagram 213. After that, the encoder may perform a DCT (and quantization) on the difference feature data diagram 213 to generate a TU 220.

In FIG. 2, the TU 220 may include a plurality of feature coefficients illustrated as grids, and the above-mentioned feature coefficients may include, for instance, significant feature coefficients (i.e., non-zero feature coefficients illustrated as shaded grids) and insignificant feature coefficients (i.e., feature coefficients whose value is 0, which are illustrated as blank grids).

As shown in FIG. 2, the TU 220 may, for instance, be divided into a plurality of sub-blocks, each of the sub-blocks may include, for instance, 4×4 feature coefficients, and the sub-blocks may be divided into a plurality of significant sub-blocks and a plurality of insignificant sub-blocks. After that, the encoder may find an LSC 224 in the TU 220 and find a specific sub-block 222 that includes the LSC 224. Next, the encoder may scan from the specific sub-block 222 to an initial sub-block of the TU 220 (e.g., the sub-block located in the upper left corner of the TU 220) and perform operations (such as an encoding operation) on each significant feature coefficient in each sub-block.

As shown in FIG. 2, in the TU 220, the significant feature coefficients are mainly distributed and extended toward the high-frequency region in the lower right corner. In this case, if the mechanism shown in FIG. 1 is applied on the TU 220 shown in FIG. 2, the relevant information of about 51 sub-blocks should be recorded, thus resulting in a poor compression rate.

In view of the above, a feature data encoding method, an encoder, a feature data decoding method, and a decoder which may serve to solve said technical issues are provided in the invention.

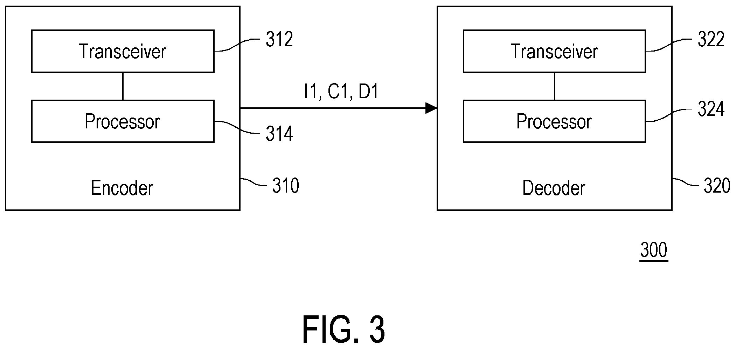

FIG. 3 is a schematic view of a feature data processing system according to an embodiment of the invention. In FIG. 3, a feature data processing system 300 includes an encoder 310 and a decoder 320, wherein the encoder 310 includes a transceiver 312 and a processor 314, and the decoder 320 includes a transceiver 322 and a processor 324.

In an embodiment, the encoder 310 may be disposed in an AIoT device at the front end of the system, for instance, while the decoder 320 may be disposed in an edge device and/or a back-end server, which should however not be construed as a limitation in the invention. In an embodiment, the encoder 310 may serve to extract feature data and provide the extracted feature data to the decoder 320 after compressing the extracted feature data. After that, the decoder 320 may, for instance, allow the edge device and/or the back-end server to perform subsequent AI recognition or other similar operations based on the feature data after restoring the feature data, which should however not be construed as a limitation in the invention.

In different embodiments, the transceivers 312 and 322 may be implemented in form of transmitting and receiving interfaces that may be configured to transmit/receive bit streams/code streams, for instance. Besides, the processor 314 is coupled to the transceiver 312, and the processor 324 is coupled to the transceiver 322.

In different embodiments, the processors 314 and 324 may be general purpose processors, special purpose processors, conventional processors, digital signal processors (DSP), a plurality of microprocessors, one or a plurality of microprocessors combined with DSP core, controllers, microcontrollers, application specific integrated circuits (ASICs), field programmable gate arrays (FPGAs), any other kind of integrated circuit, state machine, processors based on an advanced RISC machine (ARM), and the like.

In an embodiment of the invention, the processor 314 may access specific modules and programming codes to implement the feature data encoding method provided in the invention, the details of which are described below.

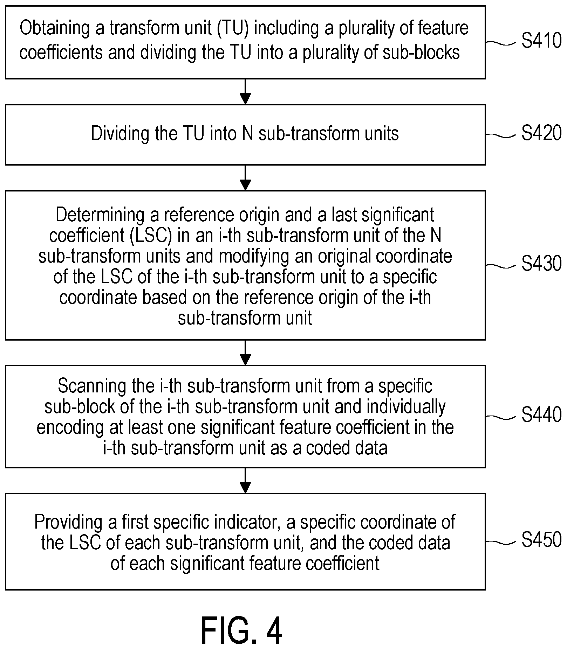

FIG. 4 is a flowchart of a feature data encoding method according to an embodiment of the invention. The method provided in this embodiment may be executed by the encoder 310 depicted in FIG. 3, and details of each step in FIG. 4 are described below with reference to the elements shown in FIG. 3.

In step S410, the processor 314 obtains a TU including a plurality of feature coefficients and divides the TU into a plurality of sub-blocks. In an embodiment, the processor 314 may, for instance, obtain the TU including a plurality of feature coefficients in the manner shown in FIG. 2 and divide the TU into a plurality of sub-blocks, which should however not be construed as a limitation in the invention.

For the convenience of descriptions, it is assumed that the TU provided herein is the TU 220 shown in FIG. 2, which should however not be construed as a limitation in the invention. As previously described, the sub-blocks in the TU 220 may include a plurality of significant sub-blocks and insignificant sub-blocks, wherein each significant sub-block includes at least one significant feature coefficient, and each insignificant sub-block includes only the insignificant feature coefficients.

In step S420, the processor 314 divides the TU 220 into N sub-transform units, wherein each sub-transform unit includes at least one of the sub-blocks, and N is an integer greater than or equal to 1.

In different embodiments, the processor 314 may determine how to divide the TU 220 into the N sub-transform units in different ways.

In an embodiment, it is assumed that the TU 220 has a plurality of first dividing options in a first direction (e.g., an x direction) and a plurality of second dividing options in a second direction (e.g., a y direction); if so, the processor 314 may select one of the first dividing options and one of the second dividing options to divide the TU 220 into the N sub-transform units.

In an embodiment, the first dividing options are, for instance, "1", "1/2+1/2", "1/4+3/4", and "3/4+1/4", wherein "1" means not to divide the TU 220 in the first direction, for instance. In addition, "1/2+1/2" means, for instance, to divide the TU 220 into two parts in the first direction, and the ratio of the two parts is 1:1. "1/4+3/4" means, for instance, to divide the TU 220 into two parts in the first direction, and the ratio between the two parts is 1:3. "3/4+1/4" means, for instance, to divide the TU 220 into two parts in the first direction, and the ratio between the two parts is 3:1, which should however not be construed as a limitation in the invention.

In an embodiment, the second dividing options are, for instance, "1", "1/2+1/2", "1/4+3/4", and "3/4+1/4", wherein "1" means, for instance, not to divide the TU 220 in the second direction. In addition, "1/2+1/2" means, for instance, to divide the TU 220 into two parts in the second direction, and the ratio between the two parts is 1:1. "1/4+3/4" means, for instance, to divide the TU 220 into two parts in the second direction, and the ratio between the two parts is 1:3. "3/4+1/4" means, for instance, to divide the TU 220 into two parts in the second direction, and the ratio between the two parts is 3:1, which should however not be construed as a limitation in the invention.

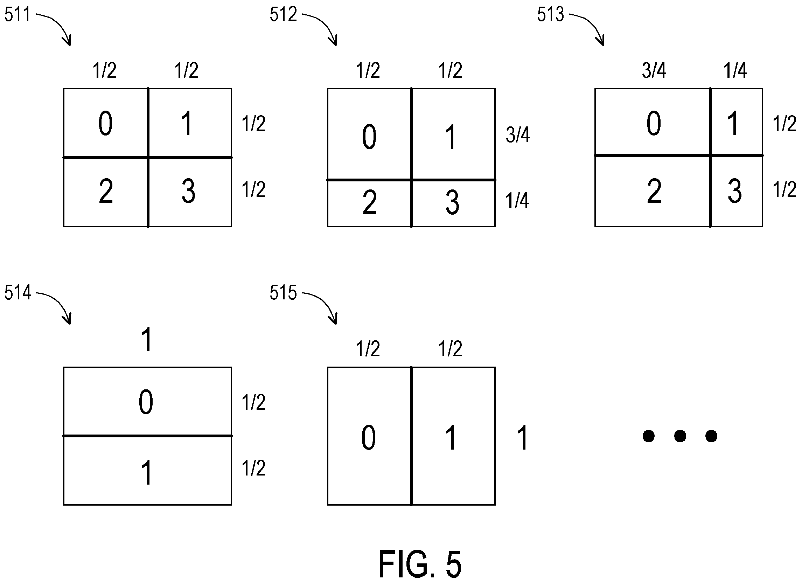

FIG. 5 is a schematic view of dividing a TU according to different embodiments of the invention. In FIG. 5, a dividing method 511 is, for instance, to select the first dividing option of "1/2+1/2" in the first direction and the second dividing option of "1/2+1/2" in the second direction, so as to divide the TU into four sub-transform units (whose reference numbers are 0 to 3, for instance). A dividing method 512 is, for instance, to select the first dividing option of "1/2+1/2" in the first direction and select the second dividing option of "3/4+1/4" in the second direction, so as to divide the TU into four sub-transform units (whose reference numbers are 0 to 3, for instance).

A dividing method 513 is, for instance, to select the first dividing option of "3/4+1/4" in the first direction and select the second dividing option of "1/2+1/2" in the second direction, so as to divide the TU into four sub-transform units (whose reference numbers are 0 to 3, for instance). A dividing method 514 is, for instance, to select the first dividing option of "1" in the first direction and select the second dividing option of "1/2+1/2" in the second direction, so as to divide the TU into two sub-transform units (whose reference numbers are 0 to 1, for instance). A dividing method 515 is, for instance, to select the first dividing option of "1/2+1/2" in the first direction and select the second dividing option of "1" in the second direction, so as to divide the TU into two sub-transform units (whose reference numbers are 0 to 1, for instance).

In other embodiments, if the first dividing option of "1" is selected in the first direction, and the second dividing option of "1" is selected to divide TU in the second direction, the obtained sub-transform unit may be considered as being equal to the TU, which should however not be construed as a limitation in the invention.

In an embodiment, the processor 314 may, for instance, determine to select which first/second dividing option for dividing the TU based on a concept of rate distortion optimization (RDO).

In an embodiment, the processor 314 may obtain the first rate distortion costs (RD costs) respectively corresponding to the first dividing options and accordingly select a first specific dividing option (e.g., a first dividing option corresponding to the lowest first RD cost) from these first dividing options. In addition, the processor 314 may obtain the second RD costs respectively corresponding to the second dividing options and accordingly select a second specific dividing option (e.g., a second dividing option corresponding to the lowest second RD cost) from these second dividing options. After that, the processor 314 may divide the TU 220 in the first direction and the second direction by adopting the first specific dividing option and the second specific dividing option, respectively, so as to obtain the N sub-transform units.

For instance, it is assumed that the processor 314 determines that the first dividing option of "1/2+1/2" corresponds to the lowest first RD cost, and that the second dividing option of "3/4+1/4" corresponds to the lowest second RD cost; if so, the processor 314 may divide the TU 220 into four sub-transform units according to the dividing method 512 depicted in FIG. 5, which should however not be construed as a limitation in the invention.

In another embodiment, the processor 314 may generate a plurality of dividing option combinations based on the first dividing options and the second dividing options described above, wherein each dividing option combination may include one of the first dividing options and one of the second dividing options. For instance, the dividing methods 511 to 515 in FIG. 5 may be understood as corresponding to five dividing option combinations.

After that, the processor 314 may obtain the RD cost of each dividing option combination and accordingly select a specific dividing option combination (e.g., a dividing option combination corresponding to the lowest RD cost) from these dividing option combinations, wherein the specific dividing option combination may include the first specific dividing option and the second specific dividing option.

The processor 314 may then adopt the first specific dividing option and the second specific dividing option respectively in the first direction and the second direction to divide the TU 220 and thus obtain the N sub-transform units.

For instance, if it is assumed the processor 314 determines that the dividing option combination corresponding to the dividing method 513 in FIG. 5 has the lowest RD cost, then the processor 314 may adopt the first dividing option of "3/4+1/4" in the first direction and the second dividing option of "1/2+1/2" in the second direction to divide the TU 220 into four sub- transform units, which should however not be construed as a limitation in the invention.

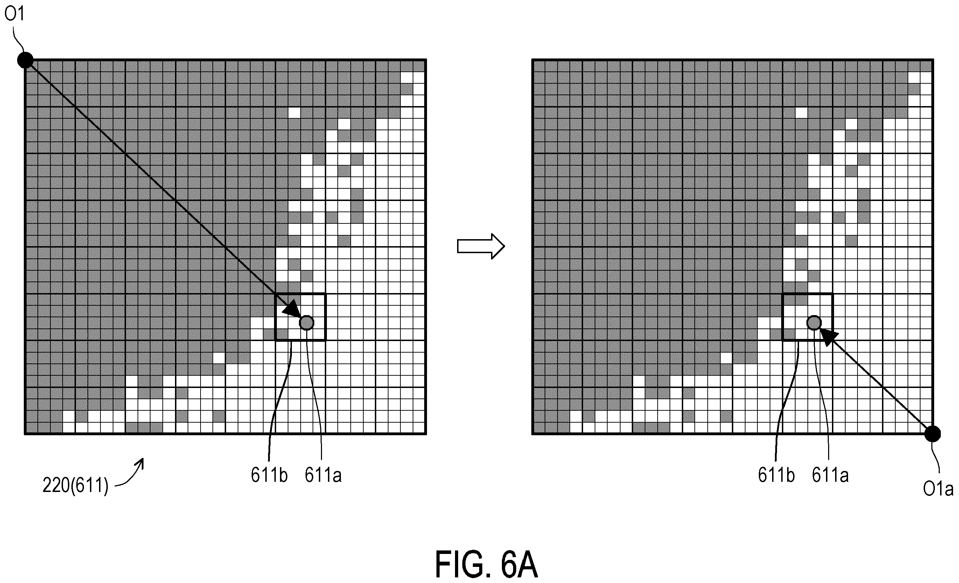

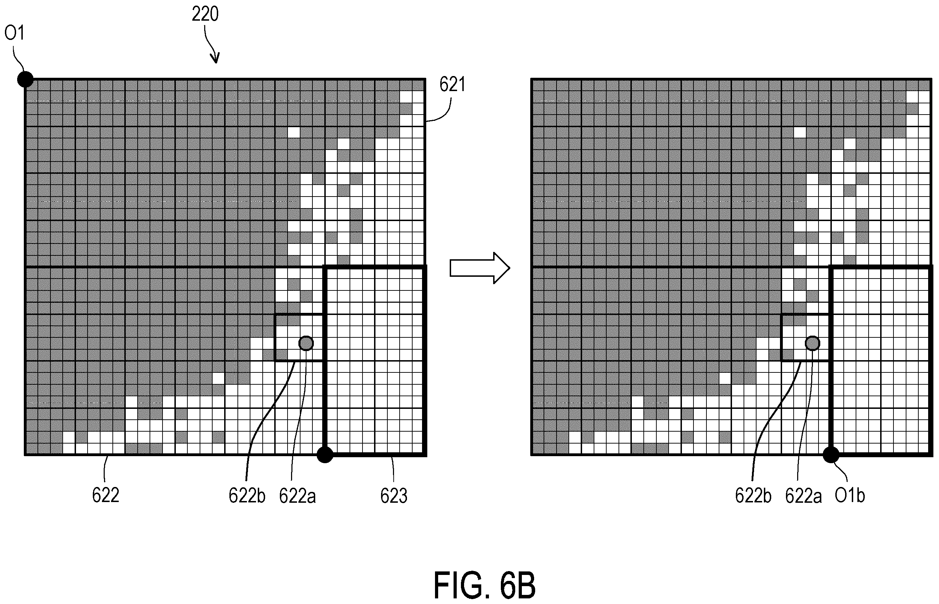

After obtaining the N sub-transform units, in step S430, the processor 314 determines a reference origin and an LSC in an i-th sub-transform unit of the N sub-transform units (i is an index value) and modifies an original coordinate of the LSC of the i-th sub-transform unit to a specific coordinate based on the reference origin of the i-th sub-transform unit, wherein the LSC of the i-th sub-transform unit is located in the specific sub-block in the i-th sub-transform unit. For better understanding, further explanations will be provided with reference to FIG. 6A and FIG. 6B, which are schematic views of a coordinate modification mechanism according to an embodiment of the invention.

In FIG. 6A, if it is assumed that the TU 220 is divided into one sub-transform unit 611 after being processed in step S420, then the sub-transform unit 611 may be understood as being equal to the TU 220. In this case, the processor 314 may determine a reference origin O1a and an LSC 611a in the sub-transform unit 611 (located in the specific sub-block 611b) and modify the original coordinate of the LSC 611a to a specific coordinate based on the reference origin O1a of the sub-transform unit 611.

In this embodiment, the transform unit 220 may have a default origin O1, which is, for instance, located in the upper left corner of the transform unit 220 and may be represented as (0, 0). In this case, the original coordinate of the LSC 611a may be represented as $(x_{LSC}, y_{LSC})$, for instance.

In FIG. 6A, the processor 314 may, for instance, take the end coordinate of the sub-transform unit 611 (e.g., the coordinate located at the lower right corner of the sub-transform unit 611) as the reference origin O1a of the sub-transform unit 611. After that, the processor 314 may modify the original coordinate of the LSC 611a, i.e., $(x_{LSC}, y_{LSC})$, to a specific coordinate based on the reference origin O1a.

In an embodiment, the specific coordinate of the LSC 611a may be represented as $(\Delta x, \Delta y) = (x_{LSTU} - x_{LSC}, y_{LSTU} - y_{LSC})$, wherein $(x_{LSTU}, y_{LSTU})$ is the end coordinate of the sub-transformation unit 611, which should however not be construed as a limitation in the invention.

In the scenario shown in FIG. 6A, $(\Delta x, \Delta y)$ may also be represented as:

$$\Delta x = (1 \ll Log2ZoTbWidth) - 1 - LastSignificantCoeffX;$$

$$\Delta y = (1 << Log2ZoTbHeight) - 1 - LastSignificantCoeffY;$$

wherein 1 « *Log2k* indicates moving a bit with a binary value 1 to the left by k locations, e.g., 1 « *Log28* indicates moving the bit with the binary value 1 to the left by 8 locations, namely, "10000000" (i.e., 226). *LastSignificantCoeffX* and *LastSignificantCoeffY* are an x-coordinate and a y-coordinate of the original coordinate of the LSC 611a, respectively. Besides, if a width and a height of the sub-transform unit 611 (i.e., the transform unit 220) are respectively represented as Width and Height, then *ZoTbWidth* is $\log_2$ *Width,* and *ZoTbHeightis* $\log_2$ *Height,* respectively.

For instance, if the width and the height of the sub-transform unit 611 (i.e., the transform unit 220) are respectively represented as 256 and 128, then *ZoTbWidth* is 8 (i.e., $\log_2$ 256), and *ZoTbHeight* is 7 (i.e., $\log_2$ 128). In this case, ($\Delta x,$

$\Delta y) = (256 - 1 - \textit{LastSignificantCoeffX}, 128 - 1 - \textit{LastSignificantCoeffY})$.

In FIG. 6B, it is assumed that the transform unit 220 is divided into three sub-transform units 621 to 623 after the step S420 is performed to process the transform unit 220. In this case, the processor 314 may perform the coordinate modification operation on the corresponding LSC in each of the sub-transform units 621 to 623.

The sub-transform unit 622 is taken as an example. The processor 314 may determine a reference origin O1b and the LSC 622a (located in the specific sub-block 622b) in the sub-transform unit 622, for instance, and the processor 314 may modify the original coordinate of the LSC 622a to a specific coordinate based on the reference origin O1b of the sub- transform unit 622.

In this embodiment, the transform unit 220 may have the default origin O1, which is, for instance, located in the upper left corner of the transform unit 220 and may be represented as (0, 0). In this case, the original coordinate of the LSC 622a may be represented as $(x_{LSC}, y_{LSC})$, for instance.

In FIG. 6B, the processor 314 may, for instance, take the end coordinate of the sub-transform unit 622 (e.g., the coordinate located at the lower right corner of the sub-transform unit 622) as the reference origin O1b of the sub-transform unit 622. After that, the processor 314 may modify the original coordinate of the LSC 622a, i.e., $(x_{LSC}, y_{LSC})$, to a specific coordinate based on the reference origin O1b.

In an embodiment, the specific coordinate of the LSC 622a may be represented as $(\Delta x, \Delta y) = (x_{LSTU} - x_{LSC}, y_{LSTU} - y_{LSC})$, wherein $(x_{LSTU}, y_{LSTU})$ is the end coordinate of the sub-transformation unit 622, which should however not be construed as a limitation in the invention.

Similarly, the processor 314 may perform the above-mentioned operations on other sub-transform units to obtain the specific coordinate corresponding to the LSC in each sub-transform unit, which should however not be construed as a limitation in the invention. In particular, by changing the original coordinate of the LSC in each sub-transform unit to the corresponding specific coordinate for representation, the subsequently transmitted data amount may be correspondingly reduced, whereby the data transmission efficiency may be improved.

In addition, in some embodiments, in response to determining by the processor 314 a certain sub-transform unit merely includes the insignificant feature coefficients, the processor 314 may mark the sub-transform unit (e.g., the sub-transform unit 623 in FIG. 6B) as not requiring further processing, so as to expedite subsequent operations, which should however not be construed as a limitation in the invention.

After modifying the original coordinate of the LSC of the i-th sub-transform unit to the specific coordinate, in step S440, the processor 314 scans the i-th sub-transform unit from the specific sub-block of the i-th sub-transform unit and individually encodes the at least one significant feature coefficient in the i-th sub-transform unit as a coded data.

In an embodiment, the processor 314 may scan the i-th sub-transform unit by applying any scanning method. In other embodiments, the processor 314 may also determine a proper scanning method for the i-th sub-transform unit based on a specific mechanism.

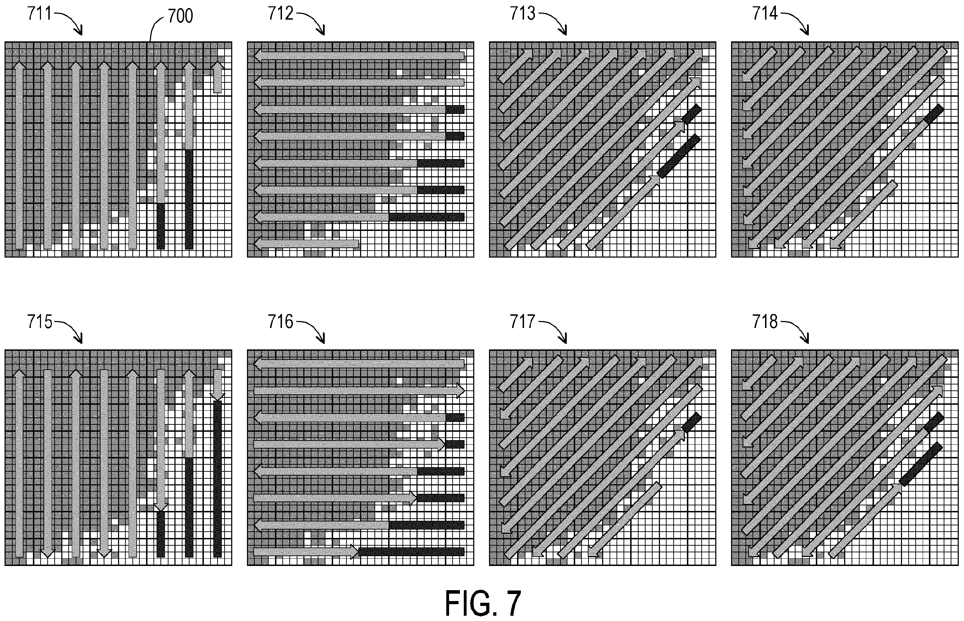

For instance, the processor 314 may select a specific scanning method corresponding to the i-th sub-transform unit from K predetermined scanning methods based on the sub-blocks in the i-th sub-transform unit, wherein K is positive integer. Further explanations will be provided below with reference to FIG. 7.

FIG. 7 is a schematic view of a plurality of predetermined scanning methods according to an embodiment of the invention. In FIG. 7, the processor 314 may, for instance, select one of eight predetermined scanning methods 711 to 718 as the specific scanning method of the i-th sub-transform unit.

In an embodiment, the processor 314 may adopt a j-th predetermined scanning method from the predetermined scanning methods 711 to 718 to scan from the specific sub-block of the i-th sub-transform unit to the initial sub-block of the i-th sub-transform unit (e.g., the sub-block located in the upper left corner of the i-th sub-transform unit) and record a specific number of passing insignificant sub-blocks of the insignificant sub-blocks during the scanning step by adopting the j-th predetermined scanning method, wherein j is an index value, and $1 \le j \le K$. After that, the processor 314 may select the specific scanning method corresponding to the i-th sub-transform unit from the predetermined scanning methods 711 to 718 based on the specific number corresponding to each of the predetermined scanning methods 711 to 718, wherein the specific number corresponding to the specific scanning method has the minimum value.

For instance, when the processor 314 performs the scanning step by applying the predetermined scanning method 711, there are six passing insignificant sub-blocks during the scanning step (corresponding to a hollow arrows), and thus a specific number of the passing insignificant sub-blocks corresponding to the predetermined scanning method 711 is 6. In another example, when the processor 314 performs the scanning step by applying the predetermined scanning method 714, there is one passing insignificant sub-block during the scanning step, and thus the specific number of the passing insignificant sub-block corresponding to the predetermined scanning method 714 is one. In addition, when the processor 314 performs the scanning step by applying the predetermined scanning method 717, there is one passing insignificant sub-block during the scanning step, and thus the specific number of the passing insignificant sub-block corresponding to the predetermined scanning method 714 is one as well. The other specific numbers of the passing insignificant sub-blocks corresponding to the other predetermined scanning methods may be derived from the teachings above and thus will not be further explained.

As described above, the processor 314 may, for instance, select the predetermined scanning method corresponding to the lowest specific number as the specific scanning method of the i-th sub-transform unit. Since the specific numbers (i.e., one) corresponding to the predetermined scanning methods 714 and 717 in FIG. 7 are both the lowest specific number, the processor 314 may select any of the predetermined scanning methods 714 and 717 as the specific scanning method, which should however not be construed as a limitation in the invention.

In other embodiments, the processor 314 may also select the desired specific scanning method from the predetermined scanning methods 711 to 718 according to other principles, which should however not be construed as a limitation in the invention.

In an embodiment, the processor 314 may further generate an insignificant sub-block list according to the scanning step by adopting the specific scanning method corresponding to the i-th sub-transform unit, wherein the insignificant sub-block list may at least record a location of each insignificant sub-block in the i-th sub-transform unit.

In an embodiment, if it is assumed that the processor 314 selects the predetermined scanning method 711 as the specific scanning method of the sub-transform unit 700, the processor 314 may, for instance, generate the corresponding insignificant sub-block list based on the following method.

For instance, the processor 314 may record the insignificant sub-block list corresponding to the predetermined scanning method 711 as [2, 4, 4, 2, 46], for instance, wherein the first value "2" represents the first to second sub-blocks (two passing sub-blocks in total) from the specific sub-block are the significant sub-blocks; the second value "4" represents that the third to sixth sub-blocks (four passing sub-blocks in total) from the specific sub-block are the insignificant sub-blocks; the third value "4" represents that the seventh to tenth sub-blocks (four passing sub-blocks in total) from the specific sub-block are the significant sub-blocks; the fourth value "2" represents that the eleventh to twelfth sub-blocks (two passing sub-blocks in total) from the specific sub-block are the insignificant sub-blocks; the fifth value "46" represents the thirteenth to fifty-eighth sub-blocks (forty-six passing sub-blocks in total) from the specific sub-block are the insignificant sub-blocks.

In another example, the processor 314 may record the insignificant sub-block list corresponding to the predetermined scanning method 711 as [110000111100111...], wherein the k-th bit corresponds to the k-th passing sub-blocks from the specific sub-block. If the k-th bit is 1, it indicates that the k-th sub-block is the significant sub-block; if the k-th bit is 0, it indicates that the k-th sub-block is the insignificant sub-block, which should however not be construed as a limitation in the invention. In other embodiments, the processor 314 may also generate the required insignificant sub-block list based on other principles, which should however not be construed as a limitation in the invention.

After determining the specific scanning method corresponding to the i-th sub-transform unit, the processor 314 may accordingly scan the i-th sub-transform unit from the specific sub-block in the i-th sub-transform unit.

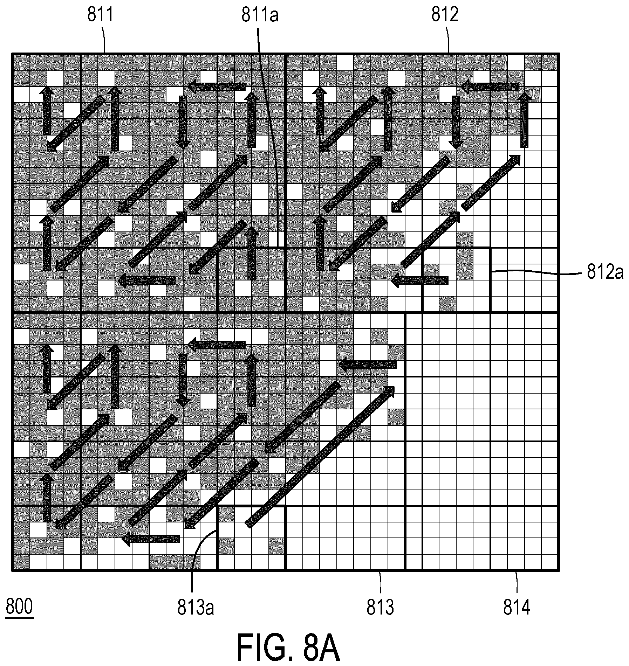

FIG. 8A is a schematic view of scanning each sub-transform unit (sub-TU) according to an embodiment of the invention. In FIG. 8A, it is assumed that a TU 800 is divided into sub-transform units 811 to 814, wherein the sub-transform unit 814 merely includes the insignificant sub-blocks. In this case, the processor 314 may determine a specific scanning method individually suitable for the sub-transform units 811 to 813 and accordingly scan the sub-transform units 811 to 813.

The sub-transform unit 811 is taken as an example. The processor 314 may perform the scanning step from a specific sub-block 811a of the sub-transform unit 811 to an initial sub-block of the sub-transform unit 811 (e.g., located in the upper left corner of the sub-transform unit 811) based on the corresponding specific scanning method (shown as an arrow sequence located in the sub-transform unit 811) and in the scanning step encode each significant feature coefficient in the sub-transform unit 811 as the corresponding coded data.

The sub-transform unit 812 is taken as an example. The processor 314 may perform the scanning step from a specific sub-block 812a of the sub-transform unit 812 to an initial sub-block of the sub-transform unit 812 (e.g., located in the upper left corner of sub-transform unit 812) based on the corresponding specific scanning method (shown as an arrow sequence located in the sub-transform unit 812) and in the scanning step encode each significant feature coefficient in the sub-transform unit 812 as the corresponding coded data.

The sub-transform unit 813 is as an example. The processor 314 may perform the scanning step from a specific sub-block 813a of the sub-transform unit 813 to an initial sub-block of the sub-transform unit 813 (e.g., located in the upper left corner of the sub-transform unit 813) based on the corresponding specific scanning method (shown as an arrow sequence located in the sub-transform unit 813) and in the scanning step encode each significant feature coefficient in the sub-transform unit 813 as the corresponding coded data.

In one or more embodiments of the invention, the processor 314 may scan the i-th sub-transform unit in the following manner, for instance. In an embodiment, the processor 314 may obtain a local LSC in a c-th significant sub-block of the significant sub-blocks in the i-th sub-transform unit, scan from the local LSC toward a local origin of the c-th significant sub-block (e.g., located in the upper left corner of the c-th significant sub-block), and encode the coded data of each significant feature coefficient in the i-th sub-transform unit. In an embodiment, the c-th significant sub-block is, for instance, the c-th passing sub-block including the at least one significant feature coefficient when the processor 314 scans the i-th sub-transform unit, which should however not be construed as a limitation in the invention. In addition, the processor 314 may scan each sub-block from the local LSC of each significant sub-block based on a certain reference scanning method (e.g., a Zigzag method), for instance.

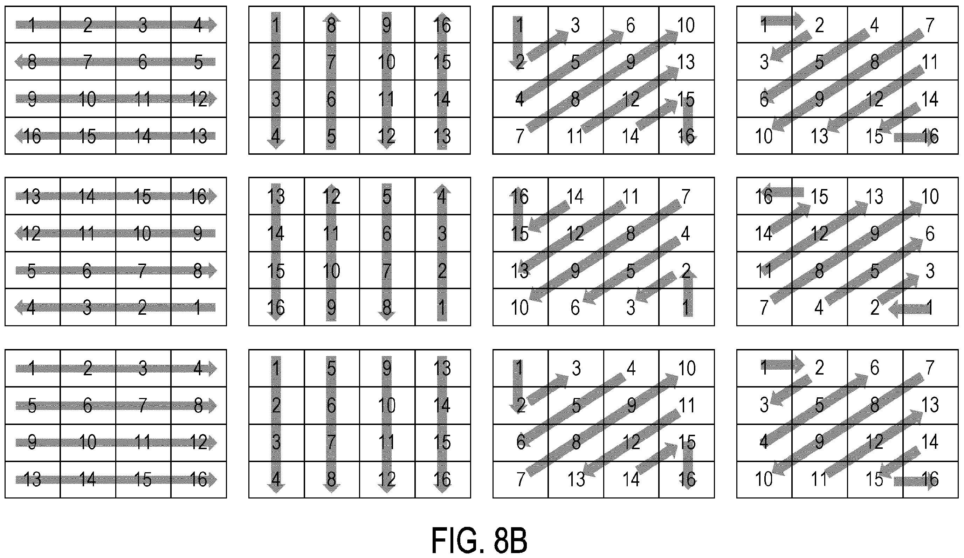

FIG. 8B is a schematic view of various scanning methods of sub-blocks according to an embodiment of the invention. In FIG. 8B, for a 4x4 sub-block, the processor 314 may, for instance, scan the sub-block based on any of the sixteen scanning methods as shown in FIG. 8B, wherein the numbers indicated in each scanning method represents a scanning order of the corresponding coefficient. That is, in each scanning method, the processor 314 sequentially scans each coefficient in the sub-block according to the numbers 1 to 16 as shown in FIG. 8B.

In other embodiments, the processor 314 may also scan each sub-transform unit and encode the significant feature coefficients based on other conventional methods, which will not be elaborated hereinafter.

In an embodiment, the processor 314 may first set a flag of each significant feature coefficient in each significant sub-block as having a first value (e.g., 1) and set a flag of each significant feature coefficient in each significant sub-block as having a second value (e.g., 0). Thereby, when the processor 314 determines that the flag of a certain feature coefficient in a certain significant sub-block has the first value, the processor 314 may read/encode the feature coefficient accordingly. On the other hand, when the processor 314 determines that the flag of a certain feature coefficient in a certain significant sub-block has the second value, the processor 314 may accordingly ignore the feature coefficient, which should however not be construed as a limitation in the invention.

Besides, since the sub-transform unit 814 merely includes the insignificant sub-blocks, the processor 314 may mark the sub-transform unit 814 as not requiring further processing, which should however not be construed as a limitation in the invention.

After completing the scanning/encoding of each sub-transform unit, in step S450, the processor 314 controls the transceiver 312 to provide a first specific indicator I1, a specific coordinate C1 of the LSC of each sub-transform unit, and the coded data D1 of each significant feature coefficient to the decoder 320. In an embodiment, the first specific indicator I1 indicates that the specific coordinate C1 of the LSC of each sub-transform unit has been modified; that is, the encoder 310 has performed the coordinate modification mechanism illustrated in FIG. 6A and/or FIG. 6B on the LSC of each sub-transform unit.

In an embodiment, the first specific indicator I1 may be implemented as a first specific flag having a first value. In an embodiment, the first specific flag may be named as "sh_reverse_last_sig_coeff_flag", for instance, and when its value is the first value (e.g., 1), it indicates that the specific coordinate C1 of the LSC of each sub-transform unit has been modified. In another embodiment, when the encoder 310 does not provide the first specific flag, it may imply that the coordinate of the LSC of each sub-transform unit is not modified, which should however not be construed as a limitation in the invention.

In addition, the processor 314 may also notify the decoder 320 of the specific scanning method and the insignificant sub-block list corresponding to the i-th sub-transform unit, which should however not be construed as a limitation in the invention.

In another embodiment, the encoder 310 may further provide a second specific flag named as "sps_reverse_last_sig_coeff_enabled_flag" to the decoder 320, wherein the second specific flag may serve to indicate whether the encoder 310 supports the above-mentioned coordinate modification mechanism. In an embodiment, when the second specific flag has the first value (e.g., 1), it indicates that the encoder 310 supports the above-mentioned coordinate modification mechanism. On the other hand, when the second specific flag has the second value (e.g., 0), it indicates that the encoder 310 does not support the above-mentioned coordinate modification mechanism. In another embodiment, when the encoder 310 does not provide the second specific flag, it may also imply that the encoder 310 does not support the above-mentioned coordinate modification mechanism, which should however not be construed as a limitation in the invention.

In an embodiment, the processor 314 may perform the above-mentioned coordinate modification mechanism only when a dimension of the TU is greater than a designated dimension (e.g., 16×16 feature coefficients). In an embodiment, before performing the step S430 in FIG. 4, the processor 314 may first determine whether the dimension of the TU is greater than the designated dimension.

In an embodiment, in response to determining that the dimension of the TU is greater than the designated dimension, the processor 314 may continue to perform the steps S430 to S450.

In another embodiment, in response to determining that the dimension of the TU is greater than the designated dimension, the processor 314 may be configured to: determine the reference origin and the LSC in the i-th sub-transform unit of the N sub-transform units; scan the i-th sub-transform unit from the specific sub-block of the i-th sub-transform unit and individually encode the significant feature coefficients in the i-th sub-transform unit as the coded data; provide a second specific indicator, the original coordinate of the LSC of each sub-transform unit, and the coded data of each significant feature coefficient to the decoder 320, wherein the second specific indicator indicates that the original coordinate of the LSC of each sub-transform unit has not been modified.

In an embodiment, the second specific indicator may be implemented as the first specific flag having a second value (e.g., 0). That is, when the value of the first specific flag is the second value (e.g., 0), it represents that the specific coordinate of the LSC of each sub-transform unit has not been modified, which should however not be construed as a limitation in the invention.

In short, if the dimension of the TU is smaller than or equal to the designated dimension, the processor 314 may perform the subsequent scanning/encoding operations without executing the coordinate modification mechanism, which should however not be construed as a limitation in the invention.

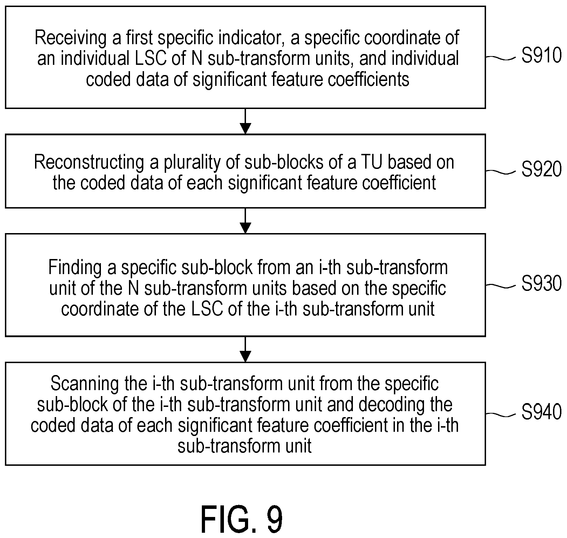

In an embodiment, in response to various data provided by the encoder 310, the decoder 320 may correspondingly perform a feature data decoding method shown in FIG. 9, the details of which are described below.

FIG. 9 is a flowchart of a feature data decoding method according to an embodiment of the invention. The method provided in this embodiment may be executed by the decoder 320 shown in FIG. 3, and the details of each step in FIG. 9 are described below with reference to the elements shown in FIG. 3.

In step S910, the processor 324 controls the transceiver 322 to receive the first specific indicator 11, the specific coordinate C1 of the individual LSC of the N sub-transform units, and the individual coded data D1 of the significant feature coefficients.

In step S920, the processor 324 reconstructs a plurality of sub-blocks of the TU based on the coded data D1 of each significant feature coefficient. In an embodiment, if it is assumed that the TU to be processed by the encoder 310 is the TU 800 in FIG. 8A, then the TU reconstructed by the processor 324 based on the various data provided by the encoder 310 may also have the configuration of the TU 800, which should however not be construed as a limitation in the invention.

In step S930, the processor 324 finds a specific sub-block from the i-th sub-transform unit based on the specific coordinate of the LSC of the i-th sub-transform unit of the N sub-transform units.

For instance, if it is assumed that the TU restored by the processor 324 has the configuration of the TU 800 in FIG. 8A, then the processor 324 may find the corresponding specific sub-blocks 811a to 813a from each of the sub-transform units 811 to 813 based on the specific coordinate of the LSC of each of the sub-transform units 811 to 813.

In step S940, the processor 324 scans the i-th sub-transform unit from the specific sub-block of the i-th sub-transform unit and decodes the coded data D1 of each significant feature coefficient in the i-th sub-transform unit.

In an embodiment, after the processor 324 obtains the specific scanning method and the insignificant sub-block list corresponding to the i-th sub-transform unit from the encoder 310, the processor 324 may scan the i-th sub-transform unit from the specific sub-block of the i-th sub-transform unit according to the specific scanning method and the insignificant sub-block list.

The sub-transform unit 811 depicted in FIG. 8A is taken as an example. The processor 324 may perform a scanning step from the specific sub-block 811a of the sub-transform unit 811 to the initial sub-block of the sub-transform unit 811 (e.g., located in the upper left corner of sub-transform unit 811) based on the corresponding specific scanning method (shown as the arrow sequence located in the sub-transform unit 811) and decode the coded data D1 of each significant feature coefficient in the scanning step.

The sub-transform unit 812 is taken as an example. The processor 324 may perform a scanning step from the specific sub-block 812a of the sub-transform unit 812 to the initial sub-block of the sub-transform unit 812 (e.g., located in the upper left corner of sub-transform unit 812) based on the corresponding specific scanning method (shown as the arrow sequence located in the sub-transform unit 812) and decode the coded data D1 of each significant feature coefficient in the scanning step.

The sub-transform unit 813 is taken as an example. The processor 324 may perform a scanning step from the specific sub-block 813a of the sub-transform unit 813 to the initial sub-block of the sub-transform unit 813 (e.g., located in the upper left corner of sub-transform unit 813) based on the corresponding specific scanning method (shown as the arrow sequence located in the sub-transform unit 813) and decode the coded data D1 of each significant feature coefficient in the scanning step.

In one or more embodiments of the invention, the processor 324 may scan the i-th sub-transform unit in the following manner, for instance. In an embodiment, the processor 324 may obtain the local LSC in the c-th significant sub-block of the significant sub-blocks in the i-th sub-transform unit, scan from the local LSC toward the local origin of the c-th significant sub-block (e.g., located in the upper left corner of the c-th significant sub-block), and decode the coded data D1 of each significant feature coefficient in the i-th sub-transform unit. In an embodiment, the c-th significant sub-block is, for instance, the c-th passing sub-block including the at least one significant feature coefficient when the processor 324 scans the i-th sub-transform unit, which should however not be construed as a limitation in the invention. In addition, the processor 324 may scan each sub-block from the local LSC of each significant sub-block based on a certain reference scanning method (e.g., a Zigzag method), for instance.

In other embodiments, the processor 324 may also scan each sub-transform unit and decode the code data D1 of each significant feature coefficient based on other conventional methods, which will not be elaborated hereinafter.

In an embodiment, when the processor 324 determines that the flag of certain coded data in a certain significant sub-block has the first value, the processor 324 may accordingly read/decode the coded data to obtain the corresponding significant feature coefficient. On the other hand, when the flag of certain coded data in a certain significant sub-block has the second value, the processor 324 may correspondingly ignore the coded data, which should however not be construed as a limitation in the invention.

Besides, if the sub-transform unit 814 is marked as not requiring further processing, the processor 324 may directly ignore the sub-transform unit 814, which should however not be construed as a limitation in the invention.

To sum up, by applying the feature data encoding method provided in one or more embodiments of the invention, the data amount of the coordinate representing the LSC in each sub-transform unit may be reduced through the above-mentioned coordinate modification mechanism, thereby correspondingly improving the transmission efficiency. In addition, by adaptively dividing the TU into the N sub-transform units, certain sub-transform units that only include the insignificant sub-blocks may be found according to one or more embodiments of the invention, and such sub-transform units may be ignored to improve the data processing efficiency. Moreover, after dividing the TU into the N sub-transform units, a proper specific scanning method may be determined for each sub-transform unit in one or more embodiments of the invention, so as to improve the efficiency of scanning each sub-transform unit.

Besides, by applying the feature data decoding method provided in one or more embodiments of the invention, the specific sub-block in each sub-transform unit may be found based on the specific coordinate of the LSC of each sub-transform unit, and the individual coded data in each sub-transform unit may be scanned/decoded according to the corresponding specific scanning method and insignificant sub-block list. Thereby, the data decoding efficiency may be improved.

## Claims

1. A feature data encoding method, the method comprising:

   obtaining, by an encoder (310), a transform unit (120, 220, 800) comprising a plurality of feature coefficients and dividing the transform unit (120, 220, 800) into a plurality of sub-blocks;
   dividing, by the encoder (310), the transform unit (120, 220, 800) into N sub-transform units (611, 621~623, 700, 811~814), wherein each of the sub-transform units (611, 621~623, 700, 811~814) comprises at least one of the sub-blocks, and N is an integer greater than or equal to 1;
   determining, by the encoder (310), a reference origin (O1a, O1b) and a last significant coefficient (124, 224, 611a, 622a) in an i-th sub-transform unit of the N sub-transform units (611, 621~623, 700, 811~814) and modifying an original coordinate of the last significant coefficient (124, 224, 611a, 622a) of the i-th sub-transform unit to a specific coordinate (C1) based on the reference origin (O1a, O1b) of the i-th sub-transform unit, wherein the last significant coefficient (124, 224, 611a, 622a) of the i-th sub-transform unit is located in a specific sub-block (122, 222, 611b, 622b, 811a~813a) in the i-th sub-transform unit, i is an index value, and $1 \leq i \leq N$;
   scanning, by the encoder (310), the i-th sub-transform unit from the specific sub-block (122, 222, 611b, 622b, 811a~813a) of the i-th sub-transform unit and encoding at least one significant feature coefficient in the i-th sub-transform unit as a coded data (D1); and
   providing, by the encoder (310), a first specific indicator (I1), the specific coordinate (C1) of the last significant coefficient (124, 224, 611a, 622a) of each of the sub-transform units (611, 621~623, 700, 811~814), and the coded data (D1) of each of the at least one significant feature coefficient, wherein the first specific indicator (I1) indicates the specific coordinate (C1) of the last significant coefficient of each of the sub-transform units (611, 621~623, 700, 811~814) is modified.

2. The method according to claim 1, wherein the sub-blocks of the transform unit comprise a plurality of significant sub-blocks and a plurality of insignificant sub-blocks, each of the significant sub-blocks comprises at least one significant feature coefficient, and each of the insignificant sub-blocks comprises an insignificant feature coefficient.

3. The method according to claim 1, further comprising:
   setting, by the encoder (310), a flag of each of the at least one significant feature coefficient in each of the significant sub-blocks as having a first value and setting a flag of each insignificant feature coefficient of each of the significant sub-blocks as having a second value.

4. The method according to claim 1, wherein the reference origin of the i-th sub-transform unit is represented as an end coordinate of the i-th sub-transform unit, and the specific coordinate (C1) of the last significant coefficient of the i-th sub-transform unit of the unit is represented as:

$$(\Delta x, \Delta y) = (x_{LSTU} - x_{LSC}, \quad y_{LSTU} - y_{LSC})$$

, wherein $(x_{LSTU}, y_{LSTU})$ is the end coordinate of the i-th sub-transform unit, and $(x_{LSC}, y_{LSC})$ is the original coordinate of the last significant coefficient of the i-th sub-transform unit.

5. The method according to claim 1, wherein the transform unit has a plurality of first dividing options in a first direction, the transform unit has a plurality of second dividing options in a second direction, and the step of dividing the transform unit into the N sub-transform units comprises:

obtaining, by the encoder (310), a first rate distortion cost corresponding to each of the first dividing options and selecting a first specific dividing option from the first dividing options accordingly;
obtaining, by the encoder (310), a second rate distortion cost corresponding to each of the second dividing options and selecting a second specific dividing option from the second dividing options accordingly; and
dividing, by the encoder (310), the transform unit respectively in the first direction and the second direction by adopting the first specific dividing option and the second specific dividing option, so as obtain the N sub-transform units,

or the step of dividing the transform unit into the N sub-transform units comprises:

generating, by the encoder (310), a plurality of dividing option combinations based on the first dividing options and the second dividing options, wherein each of the dividing option combinations comprises one of the first dividing options and one of the second dividing options;
obtaining, by the encoder (310), a rate distortion cost for each of the dividing option combinations and selecting a specific dividing option combination from the dividing option combinations accordingly, wherein the specific dividing option combination comprises a first specific dividing option and a second specific dividing option;
dividing, by the encoder (310), the transform unit respectively in the first direction and the second direction by adopting the first specific dividing option and the second specific dividing option, so as to obtain the N sub-transform units.

6. The method according to claim 1, wherein the step of scanning the i-th sub-transform unit from the specific sub-block of the i-th sub-transform unit comprises:

selecting, by the encoder (310), a specific scanning method corresponding to the i-th sub-transform unit from K predetermined scanning methods (711-718) based on the sub-blocks in the i-th sub-transform unit, wherein K is a positive integer;
scanning, by the encoder (310), the i-th sub-transform unit from the specific sub-block in the i-th sub-transform unit according to the specific scanning method corresponding to the i-th sub-transform unit;
notifying, by the encoder (310), a decoder (320) of the specific scanning method corresponding to the i-th sub-transform unit.

7. The method according to claim 6, wherein the sub-blocks of the transform unit comprise a plurality of significant sub-blocks and a plurality of insignificant sub-blocks, the i-th sub-transform unit further comprises an initial sub-block, and the step of selecting the specific scanning method corresponding to the i-th sub-transform unit from the K predetermined scanning methods (711-718) based on the sub-blocks in the i-th sub-transform unit comprises:

scanning, by the encoder (310), from the specific sub-block of the i-th sub-transform unit to the initial sub-block of the i-th sub-transform unit by adopting a j-th predetermined scanning method of the K predetermined scanning methods (711-718) and recording, by the encoder (310), a specific number of passing insignificant sub-blocks of the insignificant sub-blocks during the scanning step by adopting the j-th predetermined scanning method, wherein j is an index value, and $1 \le j \le K$; and
selecting, by the encoder (310), the specific scanning method corresponding to the i-th sub-transform unit from the K predetermined scanning methods (711-718) based on the specific number corresponding to each of the predetermined scanning methods (711-718), wherein the specific number corresponding to the specific scanning method has a minimum value.

8. The method according to claim 7, further comprising:

generating, by the encoder (310), an insignificant sub-block list according to the scanning step corresponding to adopting the specific scanning method corresponding to the i-th sub-transform unit, wherein the insignificant sub-block list records at least a location of each of the insignificant sub-blocks in the i-th sub-transform unit;

notifying, by the encoder (310), the decoder (320) of the insignificant sub-block list corresponding to the i-th sub-transform unit.

9. The method according to claim 1, further comprising:

in response to determining a dimension of the transform unit is larger than a designated dimension, determining, by the encoder (310), the reference origin and the last significant coefficient in the i-th sub-transform unit of the N sub-transform units, and modifying the original coordinate of the last significant coefficient of the i-th sub-transform unit to the specific coordinate (C1) based on the reference origin of the i-th sub-transform unit.

10. The method according to claim 9, further comprising:

in response to determining the dimension of the transform unit is smaller than or equal to the designated dimension, determining, by the encoder (310), the reference origin and the last significant coefficient in the i-th sub-transform unit of the N sub-transform units;
scanning, by the encoder (310), the i-th sub-transform unit from the specific sub-block of the i-th sub-transform unit and individually encoding, by the encoder (310), the at least one significant feature coefficient in the i-th sub-transform unit as the coded data (D1); and
providing a second specific indicator, the original coordinate of the last significant coefficient of each of the sub-transform units, and the coded data (D1) of each of the at least one significant feature coefficient, wherein the second specific indicator indicates the original coordinate of the last significant coefficient of each of the sub-transform units is not modified.

11. The method according to claim 1, wherein N is 1, the i-th sub-transform unit is equal to the transform unit, the reference origin of the transform unit is represented as the end coordinate of the transform unit, and the specific coordinate (C1) of the last significant coefficient of the transform unit is represented as:

$$(\Delta x, \Delta y) = (x_{LSTU} - x_{LSC}, \qquad y_{LSTU} - y_{LSC})$$

, wherein $(x_{LSTU}, y_{LSTU})$ is the end coordinate of the transform unit, and $(x_{LSC}, y_{LSC})$ is the original coordinate of the last significant coefficient of the transform unit.

12. The method according to claim 1, wherein N is 1, the i-th sub-transform unit is equal to the transform unit, the reference origin of the transform unit is represented as the end coordinate of the transform unit, and the specific coordinate (C1) of the last significant coefficient of the transform unit is represented as $(\Delta x, \Delta y)$, wherein:

$$\Delta x = (1 \ll Log2ZoTbWidth) - 1 - LastSignificantCoeffX;$$

$$\Delta y = (1 << Log2ZoTbHeight) - 1 - LastSignificantCoeffY$$

, wherein $1 \ll Log2k$ indicates moving a bit with a binary value 1 to the left by k locations, *LastSignificantCoeffX* and *LastSignificantCoeffY* are an x-coordinate and a y-coordinate of the original coordinate of the last significant coefficient of the transform unit, respectively, and *ZoTbWidth* and *ZoTbHeight* are $log_2$ *Width* and $log_2$ *Height,* respectively, wherein Width and Height represent a width and a height of the transform unit, respectively.

13. A feature data decoding method, the method comprising:

receiving, by a decoder (320), a first specific indicator (I1), a specific coordinate (C1) of an individual last significant coefficient (124, 224, 611a, 622a) of N sub-transform units (611, 621~623, 700, 811~814), and individual coded data (D1) of at least one significant feature coefficient, wherein the first specific indicator (I1) indicates the specific coordinate (C1) of the last significant coefficient (124, 224, 611a, 622a) of each of the sub-transform units (611, 621~623, 700, 811~814) is modified, and N is an integer greater than or equal to 1;
reconstructing, by the decoder (320), a plurality of sub-blocks of a transform unit (120, 220, 800) based on the coded data (D1) of each of the at least one significant feature coefficient;
finding, by the decoder (320), a specific sub-block (122, 222, 611b, 622b, 811a~813a) from an i-th sub-transform unit of the N sub-transform units (611, 621~623, 700, 811~814) based on the specific coordinate (C1) of the last significant coefficient (124, 224, 611a, 622a) of the i-th sub-transform unit of the N sub-transform units (611, 621~623, 700, 811~814), wherein i is an index value, and $1 \leq i \leq N$; and

scanning, by the decoder (320), the i-th sub-transform unit from the specific sub-block (122, 222, 611b, 622b, 811a~813a) of the i-th sub-transform unit and decoding the coded data (D1) of each of the at least one significant feature coefficient in the i-th sub-transform unit.

14. The method according to claim 13, wherein the step of scanning the i-th sub-transform unit from the specific sub-block of the i-th sub-transform unit comprises:

obtaining, by the decoder (320), a specific scanning method corresponding to the i-th sub-transform unit and an insignificant sub-block list and scanning, by the decoder (320), the i-th sub-transform unit from the specific sub-block of the i-th sub-transform unit based on the specific scanning method and the insignificant sub-block list, wherein the insignificant sub-block list at least records a location of at least one insignificant sub-block in the i-th sub-transform unit.

15. The method according to claim 13, wherein the i-th sub-transform unit comprises at least one significant sub-block, and the step of scanning the i-th sub-transform unit from the specific sub-block of the i-th sub-transform unit and decoding the coded data (D1) of each of the at least one significant feature coefficient in the i-th sub-transform unit comprises:

obtaining, by the decoder (320), a local last significant coefficient in a c-th significant sub-block of the at least one significant sub-block of the i-th sub-transform unit, scanning, by the decoder (320), from the local last significant coefficient toward a local origin of the c-th significant sub-block, and decoding, by the decoder (320), the coded data (D1) of each of the at least one significant feature coefficient in the i-th sub-transform unit.

16. The method according to claim 15, wherein the step of decoding the coded data (D1) of each of the significant feature coefficients in the i-th sub-transform unit comprises:

obtaining, by the decoder (320), a flag of a first coded data (D1) of the c-th significant sub-block;

in response to determining the flag of the first coded data (D1) has a first value, reading and decoding, by the decoder (320), the first coded data (D1);

in response to determining the flag of the first coded data (D1) has a second value, ignoring, by the decoder (320), the first coded data (D1).

17. A decoder (320), comprising:

a transceiver (312, 322); and

a processor (314, 324), coupled to the transceiver (312, 322) and configured to execute following steps:

controlling the transceiver (312, 322) to receive a first specific indicator (I1), a specific coordinate (C1) of an individual last significant coefficient (124, 224, 611a, 622a) of N sub-transform units (611, 621~623, 700, 811~814), and individual coded data (D1) of at least one significant feature coefficient, wherein the first specific indicator (I1) indicates the specific coordinate (C1) of the last significant coefficient (124, 224, 611a, 622a) of each of the sub-transform units (611, 621~623, 700, 811~814) is modified, and N is an integer greater than or equal to 1;

reconstructing a plurality of sub-blocks of a transform unit (120, 220, 800) based on the coded data (D1) of each of the at least one significant feature coefficient;

finding a specific sub-block (122, 222, 611b, 622b, 811a~813a) from an i-th sub-transform unit of the N sub-transform units (611, 621~623, 700, 811~814) based on the specific coordinate (C1) of the last significant coefficient (124, 224, 611a, 622a) of the i-th sub-transform unit of the N sub-transform units (611, 621~623, 700, 811~814), wherein i is an index value, and $1 \leq i \leq N$; and

scan the i-th sub-transform unit from the specific sub-block (122, 222, 611b, 622b, 811a~813a) of the i-th sub-transform unit and decoding the coded data (D1) of each of the at least one significant feature coefficient of the i-th sub-transform unit.

FIG. 1

FIG. 2

FIG. 3

Obtaining a transform unit (TU) including a plurality of feature coefficients and dividing the TU into a plurality of sub-blocks — S410

Dividing the TU into N sub-transform units — S420

Determining a reference origin and a last significant coefficient (LSC) in an i-th sub-transform unit of the N sub-transform units and modifying an original coordinate of the LSC of the i-th sub-transform unit to a specific coordinate based on the reference origin of the i-th sub-transform unit — S430

Scanning the i-th sub-transform unit from a specific sub-block of the i-th sub-transform unit and individually encoding at least one significant feature coefficient in the i-th sub-transform unit as a coded data — S440

Providing a first specific indicator, a specific coordinate of the LSC of each sub-transform unit, and the coded data of each significant feature coefficient — S450

FIG. 4

FIG. 5

FIG. 6A

FIG. 6B

FIG. 7

FIG. 8A

812a
812
811a
811
814
813
813a
800

FIG. 8B

Receiving a first specific indicator, a specific coordinate of an individual LSC of N sub-transform units, and individual coded data of significant feature coefficients ⌐ S910

↓

Reconstructing a plurality of sub-blocks of a TU based on the coded data of each significant feature coefficient ⌐ S920

↓

Finding a specific sub-block from an i-th sub-transform unit of the N sub-transform units based on the specific coordinate of the LSC of the i-th sub-transform unit ⌐ S930

↓

Scanning the i-th sub-transform unit from the specific sub-block of the i-th sub-transform unit and decoding the coded data of each significant feature coefficient in the i-th sub-transform unit ⌐ S940

FIG. 9